# EUROPÄISCHE PATENTSCHRIFT

(11) **EP 3 339 222 B1**
(45) Veröffentlichungstag und Bekanntmachung des Hinweises auf die Patenterteilung: **27.01.2021**
(21) Anmeldenummer: 16206406.7
(22) Anmeldetag: 22.12.2016
(51) Int. Cl.: B65G 47/84, B65G 47/91

(54) **FÖRDEREINRICHTUNG FÜR DOSENROHLINGE**
CONVEYING DEVICE FOR CANS
DISPOSITIF DE TRANSPORT POUR ÉBAUCHES DE BOÎTE

(43) Veröffentlichungstag der Anmeldung: 27.06.2018
(73) Patentinhaber: HINTERKOPF GmbH, 73054 Eislingen/Fils (DE)
(72) Erfinder: Drexler, Stefan, 73337 Hausen - Bad Überkingen (DE); Osswald, Steffen, 73312 Geislingen (DE); Göser, Alan, 73326 Deggingen (DE)
(74) Vertreter: Patentanwälte Magenbauer & Kollegen Partnerschaft mbB

(56) Entgegenhaltungen:
- EP-A1- 1 132 207
- EP-A2- 0 355 971
- WO-A1-2006/094807
- WO-A1-2012/107172
- DE-A1-102009 029 778
- DE-A1-102012 101 076
- DE-C1- 4 010 601
- NL-C2- 1 000 675
- US-A- 3 602 357
- US-A- 4 009 776
- US-A1- 2007 137 982

## Beschreibung

Die Erfindung betrifft eine Fördereinrichtung für Dosenrohlinge, mit einem Maschinengestell, an dem wenigstens eine Fördertrommel drehbeweglich um eine Drehachse gelagert ist, wobei die Fördertrommel an einer Außenumfangsfläche mit mehreren, jeweils parallel zur Drehachse linearbeweglich gelagerten Dosenhalter versehen ist, sowie mit wenigstens einer der Fördertrommel zugeordneten Stellanordnung, die zur Einleitung einer Linearbewegung auf wenigstens einen Dosenhalter ausgebildet ist.

Aus der DE 40 10 601 C1 ist ein Transportschalen aufweisendes Transportmittel bekannt, wobei die Transportschalen senkrecht zur Bewegungsrichtung des Transportmittels durch Führungen verschiebbar sind und wobei das Transportmittel einen Zylinder mit Kurvennuten umfasst, die für einen Eingriff eines Führungsdorns vorgesehen sind, um in Abhängigkeit von einer Rotationsposition der jeweiligen Transportschale gegenüber dem Zylinder eine vorgebbare Axialposition einzunehmen.

Die EP 1 132 207 A1 offenbart eine Transfereinrichtung, bei der zu bedruckende Hohlkörper von einem als Zufuhr-Fördereinrichtung bezeichneten Ladestern auf einen Spindelteller übergeben werden können, wobei im Zuge dieser Übergabe eine Überlagerung einer Schwenkbewegung und einer Radialbewegung für die einzelnen Hohlkörper vorgesehen ist.

Die WO 2006/09480 A1 offenbart eine drehangetriebene Trommel mit Transportschalen zum Halten von Hohlkörpern, wobei die Transportschalen schwenkbar um zur Trommelachse parallele Rohre angeordnet sind und wobei die Transportschalen zur Erzeugung einer ungleichförmigen Transportgeschwindigkeit entlang einer Steuerkurve zwangsgeführt sind.

Aus der DE 10 2012 101 076 A1 ist eine Dosentransfervorrichtung bekannt, bei der Dosenaufnahmen beweglich an einer Vakuumtrommel angebracht sind und eine axiale Verstellbewegung auf einer feststehenden Kurvenbahn durchführen.

Die DE 10 2009 029 778 A1 offenbart eine parallele Anordnung von zwei Vakuumtrommeln, die jeweils mit linearbeweglichen Schlitten ausgerüstet sind, wobei die Vakuumtrommeln kurvengesteuert arbeiten. Die DE 10 2009 029 778 A1 offenbart die Merkmale des Oberbegriffs des Anspruchs 1.

Die US 2007/137982 A1 offenbart eine Vorrichtung zur Veränderung eines Abstands einer Gruppe von Produkten, wobei zu diesem Zweck beispielhaft Scherenarme vorgesehen sind, mit denen die in einer ersten Teilung aufgenommenen Produkte beispielsweise aneinander angenähert werden können, um diese in einer zweiten Teilung gestapelt abzulegen.

Aus der NL 1000675 C2 ist bekannt, dass eine Vakuumtrommel mit mehreren Vakuumgreifern drehbeweglich an einem Maschinengestell gelagert ist und die Vakuumgreifer zumindest abschnittsweise auf einer Steuerkurve ablaufen, um eine lineare Verstellung parallel zur Drehachse der Vakuumtrommel zu erzeugen.

Die Aufgabe der Erfindung besteht darin, eine Fördereinrichtung bereitzustellen, die mit mehreren Bearbeitungsmaschinen gekoppelt werden kann und die eine flexible Arbeitsweise ermöglicht.

Diese Aufgabe wird für eine Fördereinrichtung der eingangs genannten Art mit den Merkmalen des Anspruchs 1 gelöst.

Die Stellanordnung ermöglicht eine Anpassung der Bewegungsbahnen für die Dosenhalter relativ zum Maschinengestell, um auf diesem Wege die Linearbewegungen der Dosenhalter an den jeweils vorgesehenen Förderweg für die Dosenrohlinge anpassen zu können. Wahlweise ist vorgesehen, dass sämtliche der Dosenhalter bei einer Umlaufbewegung der Fördertrommel um die Drehachse den gleichen Bewegungsweg zurücklegen, zu diesem Zweck kann die Stellanordnung eine fest vorgegebene Geometrie aufweisen und ist zu Anpassung der Bewegungsbahnen drehbeweglich am Maschinengestell gelagert. Alternativ ist vorgesehen, dass Gruppen von Dosenhaltern oder einzelne Dosenhalter individuelle Linearbewegungen ausführen können, was beispielsweise zum Vereinzeln von Dosenrohlingen genutzt werden kann, beispielsweise um aus einer Gesamtheit von Dosenrohlinge, die an die Fördertrommel bereitgestellt werden, entsprechend einer Vorgabe einen Teil der Dosenrohlinge einem ersten Bearbeitungsablauf zuzuführen, während der übrige Teil der Dosenrohlinge einem zweiten Bearbeitungsablauf zugeführt wird. Dies kann beispielsweise durch individuelle Beeinflussung der Linearbewegung für die einzelnen Dosenhalter und die daran aufgenommenen Dosenrohlinge bewirkt werden. Exemplarisch kann vorgesehen werden, dass jedem der Dosenhalter ein Linearaktor, insbesondere ein elektrischer Linearsteller oder ein Pneumatikzylinder zugeordnet ist, der mittels einer entsprechenden Ventileinrichtung individuell angesteuert werden kann, um die lineare Position des jeweiligen Dosenhalters beeinflussen zu können. In diesem Fall wird durch pneumatische oder elektrische Ansteuerung der zugeordneten Ventileinrichtungen die gewünschte Abhängigkeit der Linearbewegung des jeweiligen Dosenhalters von der Drehstellung der Fördertrommel gegenüber dem Maschinengestell gewährleistet.

Zweckmäßig ist es, wenn die Stellanordnung für die, insbesondere zyklisch, wiederkehrende Bereitstellung von Linearbewegungen auf mehrere, insbesondere auf alle, an der Fördertrommel aufgenommenen Dosenhalter ausgebildet ist. Hierdurch kann eine kostengünstige Aufbauweise für die Stellanordnung verwirklicht werden, da keine individuelle Bereitstellung von Linearbewegungen für die einzelnen Dosenhalter erforderlich ist. Besonders bevorzugt ist vorgesehen, dass jeder Dosenhalter bei einer Umlaufbewegung der Fördertrommel den gleichen linearen Bewegungsweg zurücklegen, wodurch sich bei Berücksichtigung der Rotationsbewegung der Fördertrommel eine überlagerte Rotations- und Translationsbewegung für den Dosenhalter gibt, die identisch mit den Rotations- und Translationsbewegungen für alle übrigen Dosenhalter ist.

Bevorzugt ist vorgesehen, dass die Stellanordnung an einer Umfangsfläche oder an einer Stirnfläche wenigstens eine Bewegungsbahn aufweist, die für eine Anlage oder einen Eingriff eines dem jeweiligen Dosenhalter zugeordneten Führungsmittels ausgebildet ist. Die Stellanordnung bildet somit zusammen mit dem Dosenhalter eine Kulissenführung, bei der eine, vorzugsweise zwangsläufige, Beziehung zwischen der Rotationsstellung der Fördertrommel und der linearen Stellung des jeweiligen Dosenhalters gegeben ist. Vorteilhaft ist es, wenn die Bewegungsbahn als umlaufende Nut in einer kreiszylindrisch ausgebildeten Stellanordnung eingebracht ist und die Dosenhalter jeweils mit einem Steuerzapfen in diesen und eingreifen, da hierdurch in beiden Axialbewegungsrichtungen, in denen die Dosenhalter bewegt werden können, eine Zwangskopplung zwischen der Stellanordnung und den Dosenhaltern gewährleistet ist.

Bei einer Ausgestaltung der Erfindung ist vorgesehen, dass die Bewegungsbahn entlang eines ersten Bahnabschnitts, insbesondere über einen Umfangsbereich von 180 Grad, geradlinig verläuft und entlang eines zweiten Bahnabschnitts, insbesondere über einen Umfangsbereich von 180 Grad, als Abfolge von drei Kurvenabschnitten mit zwei Wendepunkten ausgebildet ist. Bei dieser Ausgestaltung der Bewegungsbahn vollziehen die Dosenhalter entlang des ersten Bahnabschnitts keine Linearbewegung, während sie entlang des zweiten Bahnabschnitts eine lineare Reversierbewegung vollziehen, die beispielsweise zum Aufsetzen eines Dosenrohlinge auf einen Aufnahmedorn einer Förderkette oder zum Abziehen eines Dosenrohlings von einem Aufnahmedorn einer Förderkette genutzt werden kann. Um einen erschütterungsarmen linearen Transport der Dosenrohlinge gewährleisten zu können gehen die mit entgegengesetzten Krümmungen ausgebildeten Bahnabschnitte jeweils stetig ineinander über, wobei der Übergang zwischen benachbarten Bahnabschnitten jeweils als Wendepunkt ausgebildet ist.

Bei einer vorteilhaften Weiterbildung der Erfindung ist vorgesehen, dass die Stellanordnung drehbeweglich am Maschinengestell aufgenommen ist und dass der Stellanordnung eine Arretiereinrichtung für eine Arretierung der Stellanordnung am Maschinengestell und/oder ein Stellantrieb für eine Verstellung der Stellanordnung gegenüber dem Maschinengestell zugeordnet ist. Durch die drehbewegliche Lagerung der Stellanordnung gegenüber dem Maschinengestell wird die gewünschte Einstellung der Phasenlage für die Linearbewegung relativ zur Rotationsbewegung der Fördertrommel ermöglicht, um die gewünschte Anpassung der Bewegungen der Dosenhalter in Abhängigkeit von den gewünschten Förderwegen für die Dosenrohlinge sicherzustellen. Mit der Arretiereinrichtung wird nach Vornahme der Einstellung der Phasenlage eine Festlegung der Stellanordnung gewährleistet, so dass im laufenden Betrieb der Fördertrommel keine unerwünschte Verstellung der Phasenlage eintritt. Ergänzend oder alternativ kann ein Stellantrieb vorgesehen sein, der eine automatisierte, fremdkraftbasierte Einstellung der Phasenlage ermöglicht und der insbesondere als elektrischer Getriebemotor ausgebildet ist. Hierdurch kann auch während eines Fördervorgangs für Dosenrohlinge eine Veränderung der Phasenlage erfolgen, so dass eine dynamische Anpassung der Förderwege für die Dosenrohlinge ermöglicht wird.

Vorteilhaft ist es, wenn die Fördertrommel mehrere, jeweils parallel zur Drehachse ausgerichtete Führungsstangen umfasst, an denen die Dosenhalter linearbeweglich aufgenommen sind und die zusammen mit einer Trommelachse ein kreisringförmiges Innenvolumen bestimmen, wobei das wenigstens eine Stellmittel in dem Innenvolumen angeordnet ist. Dabei dienen die Führungsstangen für eine gleitbewegliche Führung der zugeordneten Dosenhalter. Durch die Anordnung des Stellmittels in dem kreisringförmigen Innenvolumen, das sich zwischen den Führungsstangen und der Trommelachse ausbildet, kann eine kompakte Gestaltung der Fördertrommel erzielt werden.

In weiterer Ausgestaltung der Erfindung ist vorgesehen, dass jedem der Dosenhalter wenigstens eine Führungsstange zugeordnet ist, die mit einem Fluidkanal versehen ist, der für eine fluidisch kommunizierende Kopplung wenigstens einer am Dosenhalter ausgebildeten Fluidbohrung mit einem der Führungsstange endseitig zugeordneten Versorgungskanal ausgebildet ist. Vorzugsweise ist der Dosenhalter für eine unterdruckgestützte Anhaftung des Dosenrohlings ausgebildet und weist hierzu an einer Kontaktfläche, an der der Dosenrohlinge zur Anlage kommt, wenigstens eine Fluidbohrung auf. Eine Bereitstellung eines Unterdrucks erfolgt in diesem Fall über wenigstens eine den Dosenhalter zugeordnete Führungsstange, wobei der Dosenhalter fluiddicht und gleitbeweglich einer Führungsstange aufgenommen ist und die Führungsstange zumindest abschnittsweise mit einem Fluidkanal ausgestattet ist, der insbesondere in einer radialen Querbohrung ausmündet, mit deren Hilfe die fluidisch kommunizierende Verbindung mit der Fluidbohrung gewährleistet wird.

Zweckmäßig ist es, wenn der Dosenhalter einen fluidisch ansteuerbaren Aktor mit einem beweglich am Dosenhalter aufgenommenen Aktorglied umfasst, der für eine Bereitstellung einer Dosenabstoßbewegung ausgebildet ist. Der Aktor ermöglicht somit eine zuverlässige Ablösung des Dosenrohling von der Kontaktfläche am Dosenhalter, wobei hierzu eine in radialer Richtung nach außen gerichtete Bewegung des Aktorglieds vorgesehen ist, das in einer Kippbewegung der Dose resultiert, wodurch die flächige Anlage an der Kontaktfläche aufgehoben wird und eine eventuelle Unterdruckbeaufschlagung der Kontaktfläche keine weitere Wirkung auf den Dosenrohling hat.

Bei einer vorteilhaften Weiterbildung der Erfindung ist vorgesehen, dass die Führungsstangen jeweils endseitig in Lagerscheiben aufgenommen sind, die drehbeweglich an einer ortsfest am Maschinengestell angebrachten Trommelachse gelagert sind und dass wenigstens eine Lagerscheibe von radial ausgerichteten Versorgungskanälen durchsetzt ist, die an einem radial innenliegenden Endbereich in wenigstens eine Versorgungskammer ausmünden. Dementsprechend dient wenigstens eine der Lagerscheiben neben der ortsfesten Aufnahme der Führungsstangen zusätzlich zur Bereitstellung eines Fluidstroms an die Führungsstangen bzw. zur Abfuhr eines Fluidstroms von den Führungsstangen, so dass auf anderweitige Anschlussmittel wie beispielsweise flexible Fluidschläuche zur Fluidbeaufschlagung der Führungsstangen verzichtet werden kann und somit eine kompakte Gestaltung der Fördertrommel gewährleistet ist.

Bevorzugt ist vorgesehen, dass die wenigstens eine Versorgungskammer längs eines Umfangsabschnitts der Drehachse erstreckt ist und schwenkbeweglich verstellbar an der Trommelachse angebracht ist. Hierdurch wird eine Einstellung einer Phasenlage für einen Fluidstrom an die Führungsstangen bzw. von den Führungsstangen in Abhängigkeit von den Bedürfnissen der Förderung der Dosenrohlinge ermöglicht. Beispielhaft kann durch Verstellung der Versorgungskammer eine Phasenlage für eine Ansaugung von Dosenrohlingen oder eine Verstellung einer Phasenlage für eine Ansteuerung des Aktors zur Dosenabstoßbewegung eingestellt werden. Vorzugsweise sind mehrere, insbesondere schwenkbeweglich verstellbare Versorgungskammern an der Trommelachse angebracht, die für eine Beaufschlagung unterschiedlicher Gruppen von Versorgungskanälen mit unterschiedlichen Druckniveaus ausgebildet sind. Hierdurch wird eine individuelle Einstellung von Phasenlagen für die Abfuhr und/oder Zufuhr von Fluidströmungen den Dosenhaltern bzw. an die Dosenhalter ermöglicht.

Vorteilhaft ist es, wenn der Fördertrommel wenigstens zwei Fördermittel aus der Gruppe: Förderband mit Lademulden, Förderkette mit Ladedornen, Ladestern mit festen Ladeschalen, Ladetrommel mit linearbeweglichen Ladeschalen, Manipulator mit Dosengreifer, zugeordnet ist. Bei einem Förderband mit Lademulden ist jeder der Dosenrohlinge in einer individuell zugeordneten, insbesondere aus einem flexiblen Material gebildeten, Lademulde aufgenommen und wird durch eine Umlaufbewegung des Förderbands an die Fördertrommel zugeführt oder von der Fördertrommel abgeführt. Bei einer Förderkette sind eine Vielzahl von Kettengliedern vorgesehen, die durch Kettenniete schwenkbeweglich miteinander verbunden sind, wobei zumindest einem Teil der Kettenniete jeweils Ladedorne zugeordnet sind, die sich längs einer von dem jeweiligen Kettenniet bestimmten Schwenkachse erstrecken. Bei einem Ladestern sind mehrere Ladeschalen in fester Anordnung und mit fester Winkelteilung zu einer Rotationsachse für den Ladestern angeordnet. Bei einer Ladetrommel sind mehrere Ladeschalen mit fester Winkelteilung zu einer Rotationsachse für die Ladetrommel angeordnet, die zusätzlich parallel zur Rotationsachse Linearbewegung werden können, wobei sämtliche Ladeschalen stets dem gleichen, fest vorgegebenen Bewegungsweg folgen. Bei dem Manipulator mit Dosengreifer kann es sich insbesondere um einen Industrieroboter handeln, der eine individuelle Beladung oder Entladung der Ladetrommel mit Dosenrohlingen ermöglicht.

Bei einer vorteilhaften Weiterbildung der Erfindung ist vorgesehen, dass der Fördertrommel wenigstens zwei Ladetrommeln zugeordnet sind, deren Drehachsen parallel zur Drehachse der Fördertrommel ausgerichtet ist, wobei wenigstens einer der Ladetrommeln eine Einstelleinrichtung zur Einstellung eines Abstands gegenüber der Fördertrommel zugeordnet ist. Durch die Abstandseinstellung zwischen der Drehachse der Ladetrommel und der Drehachse der Fördertrommel kann Einfluss darauf genommen werden, ob eine Übergabe von Dosenrohlingen zwischen Fördertrommel und Ladetrommel bzw. Ladetrommel und Fördertrommel stattfindet oder nicht, so dass auf diesem Wege ebenfalls Einfluss auf einen Förderweg für die Dosenrohlinge genommen werden kann.

In weiterer Ausgestaltung der Erfindung ist vorgesehen, dass die Dosenhalter an der Fördertrommel und an den Ladetrommeln jeweils in gleicher Teilung angeordnet sind und dass eine Anzahl von Dosenhalter der Fördertrommel größer als eine Anzahl von Dosenhalter der Ladetrommel ist. Durch die gleiche Teilung für die Anordnung der Dosenhalter an der Fördertrommel und der Ladeschalen für die Ladetrommeln wird eine kontinuierliche Bewegung der Fördertrommel und der Ladetrommeln in der Art eines Rädergetriebes ermöglicht, wobei hiermit sichergestellt ist, dass jeder Dosenrohling zu jedem Zeitpunkt wenigstens an der Ladetrommel oder an der Fördertrommel aufgenommenen ist. Durch die größere Anzahl von Dosenhaltern an der Fördertrommel im Vergleich zur Anzahl der Ladeschalen an der zugeordneten Ladetrommel wird gewährleistet, dass die Fördertrommel die wenigstens zwei Ladetrommeln und gegebenenfalls noch weitere Fördermittel bedienen kann und damit die gewünschte Weichenfunktion verwirklichen kann.

Erfindungsgemäß ist vorgesehen, dass zwischen der Fördertrommel und dem Maschinengestell ein koaxial zur Fördertrommel angeordnetes und frei drehbeweglich gelagertes Kettenrad für eine Förderkette angeordnet ist und dass am Maschinengestell eine endlos umlaufende Förderkette mit mehreren Umlenkrollen gelagert ist, wobei benachbart zum Kettenrad zwei Umlenkrollen angeordnet sind, die jeweils für eine Umlenkung der Förderkette in eine Tangentenrichtung an das Kettenrad ausgebildet sind und von denen wenigstens eine linearbeweglich verstellbar am Maschinengestell aufgenommen ist. Das freie drehbewegliche Kettenrad für die Förderkette, die die Fördertrommel zumindest bereichsweise umgibt ermöglicht in Kombination mit der Stelleinrichtung, deren Phasenlage relativ zum Maschinengestell einstellbar ist, wahlweise eine oder keine Anlage von Dosenrohlingen, die von der Förderkette zugefördert werden, an den Dosenhaltern der Fördertrommel, womit ebenfalls im Sinne einer Weichenfunktion ein Förderweg für die Dosenrohlinge beeinflusst werden kann.

Eine vorteilhafte Ausführungsform der Erfindung ist in der Zeichnung dargestellt. Hierbei zeigt:
- Figur 1: eine perspektivische Vorderansicht einer Fördereinrichtung mit einem Maschinengestell, an dem eine Fördertrommel, zwei Ladetrommeln sowie drei Förderketten zur Förderung von Dosenrohlingen angebracht sind,
- Figur 2: eine Seitenansicht der Fördertrommel mit teilweise demontierten Komponenten,
- Figur 3: eine Schnittdarstellung der Fördertrommel gemäß der Figur 2,
- Figur 4: eine Schnittdarstellung der Fördertrommel mit den darin ausgebildeten Fluidkanälen,
- Figur 5: eine Abwicklung der Außenoberfläche des Steuerkörpers gemäß der Figur 2,
- Figur 6: eine rein schematische Darstellung einer ersten Phasenanordnung für eine Unterdruckbeaufschlagung und eine Überdruckbeaufschlagung eines Dosenhalters, und
- Figur 7: eine rein schematische Darstellung einer zweiten Phasenanordnung für eine Unterdruckbeaufschlagung und eine Überdruckbeaufschlagung eines Dosenhalters.

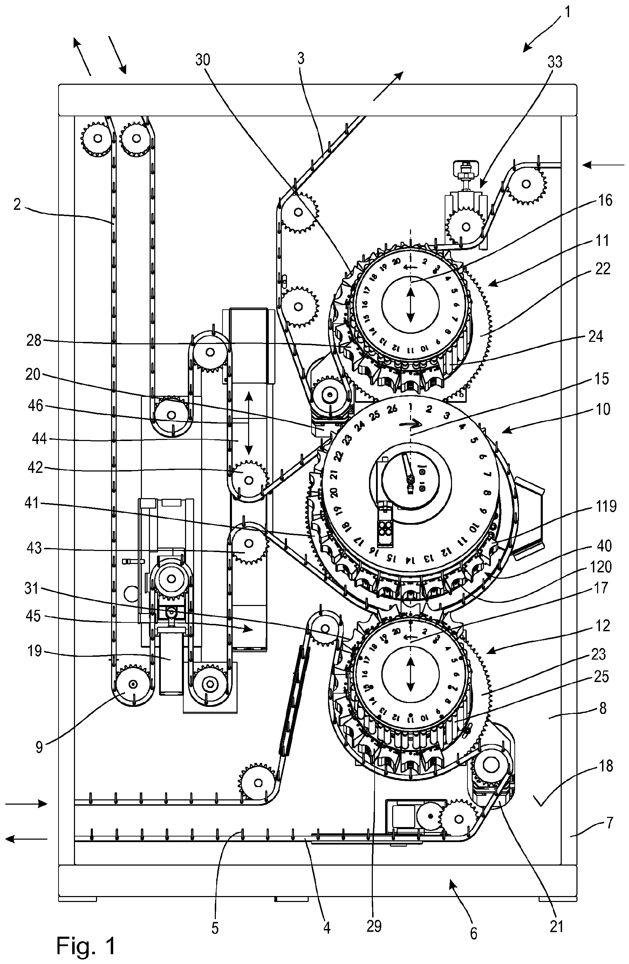

Eine in der Figur 1 dargestellte Fördereinrichtung 1 ist für eine Förderung von nicht dargestellten Dosenrohlingen, insbesondere Aerosoldosenrohlingen, Metalltubenrohlingen, Kunststofftubenrohlingen und anderen hülsenförmigen Werkstücken, ausgebildet. Ferner ist die Fördereinrichtung 1 für eine Anordnung zwischen unterschiedlichen, in der Figur 1 nicht näher dargestellten Bearbeitungsmaschinen, beispielhaft aus der Gruppe: Siebdruckmaschine, Digitaldruckmaschine, Offsetdruckmaschine, Trockenofen, Wascheinrichtung, ausgebildet, zu denen bzw. von denen Dosenrohlinge gefördert werden sollen. Dabei geschieht der Transport der nicht näher dargestellten Dosenrohlinge zu den ebenfalls nicht dargestellten Bearbeitungsmaschinen rein exemplarisch mit Hilfe unterschiedlicher Förderketten 2, 3, 4. Jede der Förderketten 2, 3, 4 ist jeweils aus einer Vielzahl von nicht näher dargestellten Kettengliedern hergestellt, wobei die Kettenglieder durch nicht näher dargestellte Kettenniete schwenkbeweglich miteinander verbunden sind. Beispielhaft ist vorgesehen, dass jedem zweiten Kettenniet ein als Ladedorn dienender Aufnahmedorn 5 zugeordnet ist, der in Verlängerung einer nicht näher dargestellten Achse des jeweiligen Kettenniets erstreckt ist und der zur Aufnahme eines Dosenrohlings vorgesehen ist. Somit kann der nicht dargestellte Dosenrohling, der insbesondere als schlanke, kreiszylindrische Metallhülse mit einem konkav eingeformtem Boden und einer dem Boden entgegengesetzt angeordneten Öffnung ausgebildet ist, mit der Öffnung auf den jeweiligen Aufnahmedorn 5 aufgeschoben. Hierdurch kann der Dosenrohling durch die Bewegung der jeweiligen Förderkette 2 bis 4 zwischen den nicht dargestellten Bearbeitungsmaschinen und der Fördereinrichtung 1 bewegt werden.

Die Aufgabe der Fördereinrichtung 1 besteht darin, eine wahlweise Bereitstellung von Dosenrohlingen, die mit einer der Förderketten 2 bis 4 der Fördereinrichtung 1 zugeführt werden, an eine der anderen Förderketten 2 bis 4 weiterzuleiten, sodass die Fördereinrichtung 1 in der Art einer Weiche betrieben werden kann, die zur Beeinflussung eines Förderwegs der jeweiligen Dosenrohlinge dient.

Die Fördereinrichtung 1 umfasst ein Maschinengestell 6, das rein exemplarisch aus einem Maschinenrahmen 7 und einer am Maschinenrahmen 7 aufgenommenen Trägerplatte 8 gebildet ist. Dabei dient der Maschinenrahmen 7 zur Abstützung der Trägerplatte 8 sowie zur Ankopplung an nicht dargestellte, benachbart angeordnete Bearbeitungsmaschinen. Die Trägerplatte 8 trägt die nachstehend näher beschriebenen Komponenten der Fördereinrichtung 1, insbesondere mehrere Umlenkrollen 9 zur Umlenkung und Führung der Förderketten 2 bis 4, die Fördertrommel 10 sowie eine rein exemplarisch der Fördertrommel 10 zugeordnete obere Ladetrommel 11 und eine ebenfalls rein exemplarisch der Fördertrommel 10 zugeordnete untere Ladetrommel 12. Um eine vorteilhafte Förderung von nicht dargestellten Dosenrohlingen mittels der Fördereinrichtung 1 gewährleisten zu können, wird beispielhaft davon ausgegangen, dass eine Drehachse 15 der Fördertrommel 10, eine Drehachse 16 der oberen Ladetrommel 11, eine Drehachse 17 der unteren Ladetrommel 12 sowie die nicht näher bezeichneten und nicht dargestellten Drehachsen der Umlenkrollen 9 jeweils parallel zueinander ausgerichtet sind. Ferner wird davon ausgegangen, dass die Drehachsen 15 bis 17 sowie die nicht dargestellten Drehachsen der Umlenkrollen 9 jeweils senkrecht zu einer größten Oberfläche 18 der Trägerplatte 8 ausgerichtet sind.

Darüber hinaus kann vorgesehen sein, dass die Förderketten 2 bis 4 in unterschiedlichen und nicht näher dargestellten Förderebenen bewegt werden, die jeweils vorgebbaren, insbesondere unterschiedlichen, Abstand zur größten Oberfläche 18 der Trägerplatte 8 aufweisen, wobei dies insbesondere zur Vermeidung von Kollisionen zwischen den einzelnen Förderketten 2 bis 4 dient. Ferner ist rein exemplarisch vorgesehen, dass jeder der Förderketten 2 bis 4 ein Antriebsmotor 19, 20, 21 zugeordnet ist, der zur Einleitung einer Umlaufbewegung auf die jeweilige Förderkette 2 bis 4 ausgebildet ist.

Beispielhaft ist vorgesehen, dass die Ladetrommeln 11 und 12 jeweils drehfest mit einem Kettenrad 22, 23 verbunden sind, sodass eine Zwangskopplung zwischen einer Umlaufbewegung der jeweiligen Förderkette 3, 4 und der jeweils zugeordneten Ladetrommel 11, 12 gewährleistet ist.

Die Ladetrommeln 11, 12 weisen jeweils eine kreisförmige Anordnung parallel zueinander ausgerichteter Lagerrohre 24, 25 auf, an denen jeweils linearbeweglich gelagerte Ladeschalen 28, 29 angebracht sind. In der Figur 1 sind zur Verdeutlichung der Ausrichtung der Lagerrohre 24, 25 abweichend von einer realen Bestückung die Ladetrommeln 11, 12 nur teilweise mit den zugeordneten Ladeschalen 28, 29 bestückt. Die Lagerrohre 24, 25 bestimmen zusammen mit einer zentral im inneren der jeweiligen Ladetrommel 11, 12 angeordneten, nicht dargestellten Trommelachse ein kreisringförmiges Innenvolumen, das koaxial zur jeweiligen Drehachse 16 beziehungsweise 17 ausgerichtet ist. In dem jeweiligen Innenvolumen ist eine ebenfalls nicht dargestellte Steuerhülse angeordnet, die wenigstens eine, vorzugsweise mehrere parallel zueinander ausgerichtete, umlaufende Steuerkurven umfasst. In die Steuerkurven greifen jeweils nicht dargestellte Führungszapfen der Ladeschalen 28 und 29 ein, um eine Axialbewegung der jeweiligen Ladeschalen 28, 29 bei einer Rotation der Lagerrohre 24, 25 der jeweiligen Ladetrommeln 11, 12 um die jeweilige Steuerhülse zu bewirken. Durch diese Linearbewegung der Ladeschalen 28, 29 kann beispielhaft ein Abziehen von nicht dargestellten Dosenrohlingen von einer der Förderketten 3 und/oder 4 und/oder ein Aufsetzen von nicht dargestellten Dosenrohlingen auf die jeweiligen Förderketten 3, 4 bewirkt werden.

Um eine zuverlässige Anhaftung der nicht näher dargestellten Dosenrohlinge an den jeweiligen Ladeschalen 28, 29 zu bewirken, sind diese an einer konkav ausgebildeten Kontaktfläche 30, 31 mit nicht näher dargestellten Fluidbohrungen versehen. Durch die Fluidbohrungen kann an den jeweiligen Kontaktflächen 30, 31 ein Unterdruck angelegt werden, der in nicht näher dargestellter Weise über die Lagerrohre 24, 25 von einem ebenfalls nicht dargestellten Unterdruckanschluss zugeführt werden kann und durch den eine Anhaftung der Dosenrohlinge zumindest über einen Teilabschnitts des Umlaufwegs der Ladeschalen 28, 29 gewährleistet werden kann.

Rein exemplarisch ist vorgesehen, dass die Kettenräder 22, 23 der Ladetrommeln 11, 12 jeweils mit einer Umschlingung von ca. 120 Grad von der jeweiligen Förderkette 3, 4 umschlungen sind. Im Bereich der Umschlingung des jeweiligen Kettenrads 22, 23 durch die jeweilige Förderkette 3, 4 kann beispielsweise ein Abziehen von Dosenrohlingen von der jeweiligen Förderkette 3, 4 und ein Weitertransport an die benachbart angeordnete Fördertrommel 10 oder ein Bereitstellen von Dosenrohlingen von der Fördertrommel 10 an die jeweilige Ladetrommel 11, 12 und ein Aufsetzen der nicht dargestellten Dosenrohlinge auf die zugeordnete Förderkette 3, 4 erfolgen.

Um eine vorteilhafte Funktion der Fördereinrichtung 1 als Weiche für nicht dargestellte Dosenrohlinge gewährleisten zu können, sind die Ladetrommeln 11, 12 jeweils individuell in ihrem Abstand gegenüber der Fördertrommel 10 einstellbar. Rein exemplarisch ist vorgesehen, dass die Drehachsen 15 bis 17 der Fördertrommel 10 sowie der Ladetrommeln 11 und 12 auf einer gemeinsamen Achse liegen und eine Abstandseinstellung für die Ladetrommel 11 und/oder für die Ladetrommel 12 längs dieser gemeinsamen Achse erfolgt. Hierzu sind der Ladetrommel 11 und der Ladetrommel 12 nicht näher dargestellte Einstellmittel, beispielsweise eine manuell zu betätigende Getriebeanordnung oder eine elektromotorisch betätigbare Getriebeanordnung zugeordnet. Durch die Beeinflussung des Abstands zwischen der jeweiligen Ladetrommel 11 und/oder 12 und der Fördertrommel 10 kann erreicht werden, dass an der Fördertrommel 10 aufgenommene, nicht dargestellte Dosenrohlinge, die nicht an die benachbart angeordnete Ladetrommel 11 oder 12 übergeben werden sollen, nicht mit den Ladeschalen 28, 29 der jeweiligen Ladetrommel 11, 12 in Kontakt kommen. Ist hingegen vorgesehen, eine Übergabe zwischen einer der Ladetrommeln 11 und/oder 12 und der Fördertrommel 10 zu vollziehen, wird eine Abstand zwischen den Drehachsen 15 bis 17 derart gewählt, dass die durch Unterdruck an den Ladeschalen 28 oder 29 anhaftenden, nicht dargestellten Dosenrohlinge an die Fördertrommel 10 übergeben oder von der Fördertrommel 10 abgenommen werden können.

Um eine vorteilhafte Zuführung der Dosenrohlinge an die Ladetrommel 11 gewährleisten zu können, ist eine Gewindespindelanordnung 33 vorgesehen, durch die eine lineare Bewegung der zugeordneten Umlenkrolle 9 relativ zur Ladetrommel 11 bewirkt werden kann, wodurch sich eine Tangentenausrichtung der Förderkette 3 gegenüber dem Kettenrad 11 und damit ein Berührbereich für den Dosenrohling mit der Ladeschale 28 einstellen lässt.

Die an der Fördertrommel 10 vorgesehenen und nachstehend näher beschriebenen Dosenhalter 40 sind in Umfangsrichtung der Fördertrommel 10 in einer Teilung angeordnet, die einer Teilung der Ladeschalen 28 und 29 der Ladetrommeln 11, 12 und auch einer Teilung der Aufnahmedorne 5 der Förderketten 2 bis 4 entspricht. Rein exemplarisch ist vorgesehen, dass der Fördertrommel 10 ein Kettenrad 41 zugeordnet ist, das nachstehend näher beschrieben wird und das gegenüber der Fördertrommel 10 frei drehbeweglich am Maschinengestell 6 gelagert ist. Das Kettenrad 41 wird von der zugeordneten Förderkette 2 rein exemplarisch mit einer Umschlingung von ungefähr 260 Grad umschlungen, hierzu wird die Förderkette 2 mit Hilfe von benachbart zur Fördertrommel 10 angeordneten Umlenkrollen 42, 43, die der Gruppe der Umlenkrollen 9 zugehörig sind, umgelenkt. Rein exemplarisch ist vorgesehen, dass die Umlenkrollen 41, 42 an einem gemeinsamen Schlitten 44 drehbar gelagert sind, der seinerseits linearbeweglich in einer Ausnehmung 45 der Trägerplatte 8 aufgenommen ist. Dem Schlitten 44 ist eine nicht näher dargestellte Einstelleinrichtung zugeordnet, mit deren Hilfe eine lineare Verlagerung des Schlittens 44 entlang des geradlinigen Bewegungswegs 46 vorgenommen werden kann. Durch diese Maßnahme kann ebenfalls Einfluss auf einen Berührpunkt bei der Zufuhr von Dosenrohlingen an die Fördertrommel 10 genommen werden.

Die Fördertrommel 10 weist in gleicher Weise wie die Ladetrommeln 10, 11 parallel zur Drehachse 15 ausgerichtete Führungsstangen 47, 48 auf, die alternierend auf einer Kreisbahn angeordnet sind. Rein exemplarisch ist vorgesehen, dass die Führungsstangen 47, 48 jeweils paarweise für eine lineare Lagerung eines Dosenhalters 40 eingesetzt werden.

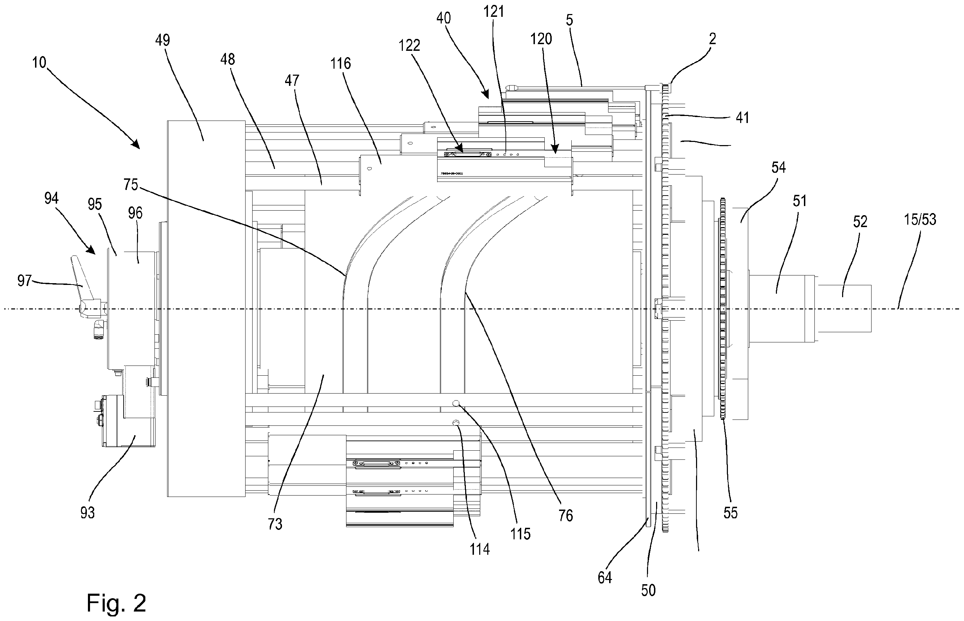

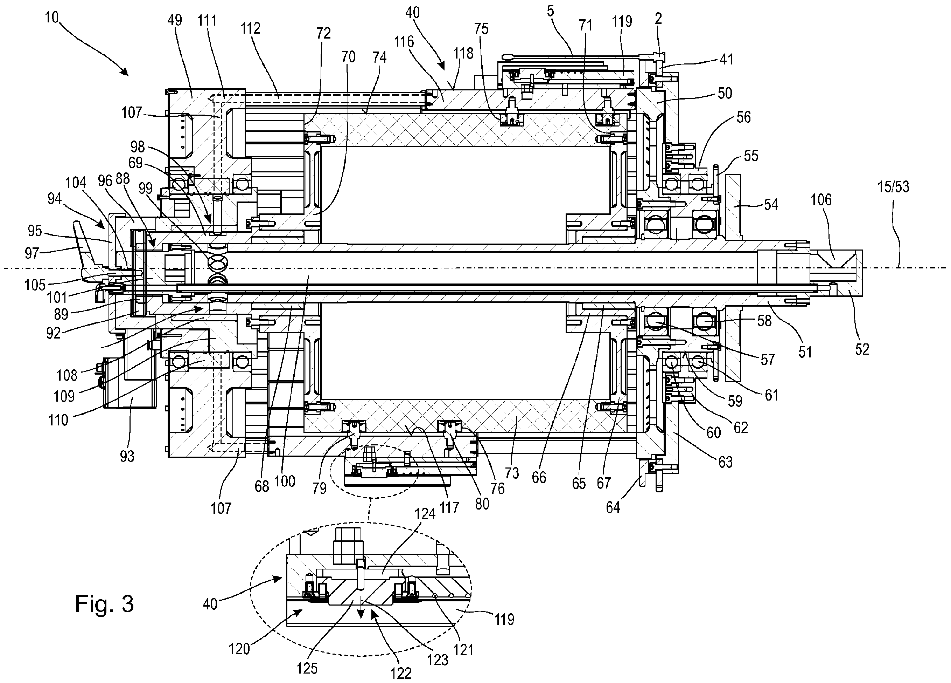

Wie den Darstellungen der Figuren 2 und 3 entnommen werden kann, erstrecken sich die Führungsstangen 47, 48 jeweils zwischen einer der Trägerplatte 8 abgewandten Lagerscheibe 49 und einer der Trägerplatte 8 zugewandten Lagerscheibe 50. Beispielhaft ist vorgesehen, dass die Lagerscheibe 50 in axialer Richtung lediglich eine geringe Erstreckung aufweist, da sie bei der dargestellten Ausführungsform der Fördertrommel 10 nur eine mechanische Stützfunktion für die Führungsstangen 47, 48 wahrnimmt. Demgegenüber weist die Lagerscheibe 49 in axialer Richtung eine verglichen mit der Lagerscheibe 50 größere axiale Erstreckung auf, da sie zusätzlich zur mechanischen Abstützung der Führungsstangen 47, 48 auch für eine phasenweise Fluidversorgung der Führungsstangen 47, 48 ausgebildet ist, wie dies nachstehend näher beschrieben wird.

Wie aus der Darstellung der Figur 2 entnommen werden kann, umfasst die Fördertrommel 10 eine Trommelachse 51, die in nicht näher dargestellter Weise mit einem Kupplungsteil 52 an der Trägerplatte 8 des Maschinengestells 6 ortsfest festgelegt wird und die rein exemplarisch mit einer Mittelachse 53 normal zur größten Oberfläche 18 der Trägerplatte 8 ausgerichtet ist. Für eine vorteilhafte Abstützung der Trommelachse 51 weist diese angrenzend an das Kupplungsteil 52 einen rein exemplarisch kreiszylindrisch ausgebildeten Befestigungsflansch 54 auf, der eine Abstützung von Kippmomenten, die auf die Fördertrommel 10 einwirken, gegenüber der Trägerplatte 8 gewährleistet.

Beispielhaft ist vorgesehen, dass der Befestigungsflansch 54 als separater Ringflansch auf die Trommelachse 51 aufgebracht und vorzugsweise reibschlüssig, insbesondere durch Aufschrumpfen, oder stoffschlüssig, insbesondere durch Schweißen, mit der Trommelachse 51 verbunden ist. In axialer Richtung benachbart zum Befestigungsflansch 54 ist ein Kettenrad 55 angeordnet.

Das Kettenrad 55 ist an einem Lagerring 56 festgelegt, der seinerseits rein exemplarisch mittels zweier Rillenkugellager 57, 58 drehbeweglich an der Trommelachse 51 gelagert ist. Der Lagerring 56 ist seinerseits fest mit der Lagerscheibe 49 gekoppelt, an der die Endbereiche der Führungsstangen 47, 48 festgelegt sind. Ferner trägt der Lagerring 56 an einer Außenumfangsfläche 59 zwei Rillenkugellager 60, 61, deren nicht näher bezeichnete Innenringe am Lagerring 56 festgelegt sind, während die ebenfalls nicht näher bezeichneten Außenringe einen Ringflansch 62 tragen, der somit drehbeweglich gegenüber dem Lagerring 56 gelagert ist. An einer der Trägerplatte 8 abgewandten Oberfläche des Ringflansches 62 ist ein ringförmiger Kettenradträger 63 festgelegt, der seinerseits an einem radial außenliegenden Oberflächenabschnitt mit dem Kettenrad 41 sowie mit einem axial vorgelagerten Stützring 64 fest verbunden ist. Aufgrund der Rillenkugellager 57, 58, 60, 61 ist einerseits eine freie Drehbeweglichkeit der Lagerscheibe 49 gegenüber der Trommelachse 51 gewährleistet, ferner ist eine freie Drehbeweglichkeit des Kettenrads 41 gegenüber der Lagerscheibe 49 gewährleistet.

In axialer Richtung ist benachbart zum Rillenkugellager 57 ein Lagerring 65 kraftschlüssig, beispielsweise durch Aufschrumpfen, auf der Trommelachse 51 festgelegt. Der Lagerring 65 wird an seinem Außenumfang von einem Gleitring 66 umgeben, der koaxial zum Lagerring 65 angeordnet ist und der drehfest mit einer ebenfalls koaxial zum Lagerring 65 angeordneten Tragscheibe 67 gekoppelt ist. Dabei sind der Lagerring 65 und der Gleitring 66 hinsichtlich der Materialauswahl und Dimensionierung derart aufeinander abgestimmt, dass diese ein Gleitlager bilden, das eine Drehbewegung der Tragscheibe 67 relativ zur Trommelachse 51 ermöglicht. In axialer Richtung beabstandet zum Lagerring 65 ist ein weiterer Lagerring 68 kraftschlüssig, insbesondere durch Aufschrumpfen, auf der Trommelachse 51 festgelegt, dem ein weiterer Gleitring 69 sowie eine mit dem Gleitring 69 gekoppelte Tragscheibe 70 zugeordnet sind. Hierdurch wird ein weiteres Gleitlager an der Trommelachse 51 gebildet, das eine Drehbewegung der Tragscheibe 70 gegenüber der Trommelachse 51 ermöglicht.

Zwischen einander gegenüberliegenden Ringflächen 71, 72 der Tragscheiben 67, 70 ist ein rein exemplarisch hülsenförmig ausgebildeter Steuerkörper 73, der auch als Stellanordnung bezeichnet werden kann, angeordnet, der jeweils drehfest mit den Tragscheiben 67 und 70 verbunden ist. Der Steuerkörper 73 ist an einer Umfangsfläche bzw. Außenoberfläche 74 rein exemplarisch mit zwei parallel zueinander verlaufenden, als Bewegungsbahnen für die Dosenhalter 40 dienden Steuernuten 75, 76 versehen. Die Steuernuten 75, 76 erstrecken sich in Umfangsrichtung über die gesamte Außenoberfläche 74 des Steuerkörpers 73 und sind sowohl in der Schnittdarstellung gemäß der Figur 3 als auch in der Seitenansicht gemäß der Figur 2, in der aus Gründen der Übersicht einige der Führungsstangen 47, 48 und der zugeordneten Dosenhalter 40 nicht dargestellt sind, erkennbar.

Aus der Schnittdarstellung der Figur 3 ist auch erkennbar, dass die an den Führungsstangen 47, 48 geführten Dosenhalter 40 jeweils mit als Führungsmittel dienenden Steuerzapfen 79, 80 in die jeweilige Steuernut 75, 76 eingreifen, wodurch eine Zwangskopplung zwischen den Dosenhalter 40 und dem Steuerkörper 73 erreicht wird. Aufgrund dieser Zwangskopplung kann bei geeignetem Verlauf der Steuernuten 75, 76, wie sie in der Figur 2 näher dargestellt sind, bei einer rotatorischen Relativbewegung der Dosenhalter 40 gegenüber dem Steuerkörper 73, also durch eine Drehbewegung der zugeordneten Lagerscheiben 49, 50 gegenüber dem Steuerkörper 73, eine Linearbewegung der Dosenhalter 40 längs der jeweiligen Führungsstangen 47, 48 erzielt werden.

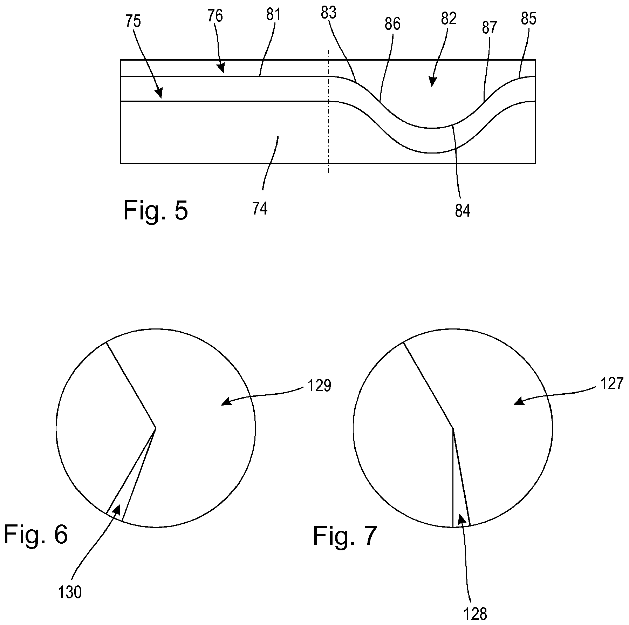

Wie aus der in Figur 5 dargestellten, rein schematischen Abwicklung der am Steuerkörper 73 vorgesehenen Steuernuten 75, 76 entnommen werden kann, weist jede der Steuernuten 75, 76 exemplarisch einen über eine erste Hälfte des Umfangs, insbesondere zwischen 0 Grad und 180 Grad, des Steuerkörpers 73 erstreckten, als Bahnabschnitt dienenden Geradenabschnitt 81 auf. Ferner weist jede der Steuernuten 75, 76 einen an den Geradenabschnitt 81 angrenzenden und über die zweite Hälfte des Umfangs, insbesondere zwischen 180 Grad und 360 Grad, der Außenoberfläche 74 des Steuerkörpers 73 erstreckten, als weiteren Bahnabschnitt dienenden Kurvenabschnitt 82 auf. Dabei weist der Kurvenabschnitt 82 rein exemplarisch drei jeweils auch als Kurvenabschnitte bezeichnete Kurventeile 83, 84 und 85 auf, die jeweils stetig ineinander übergehen. Hierbei ist zwischen den Kurventeilen 83 und 84 ein erster Wendepunkt 86 sowie zwischen den Kurventeilen 84 und 85 ein zweiter Wendepunkt 87 vorgesehen, da sich die Krümmungen der Kurventeile 83 und 84 voneinander unterscheiden und da sich auch die Krümmungen der Kurventeile 84 und 85 voneinander unterscheiden. Dementsprechend vollzieht ein Dosenhalter 40 bei einer vollständigen Umlaufbewegung um den Steuerkörper 73 entlang der ersten Hälfte des Außenumfangs der Außenoberfläche 74 durch den Eingriff in den Geradenabschnitt 81 der jeweiligen Steuernut 75, 76 keine axiale Relativbewegung. Hingegen führt der Dosenhalter 40 beim Passieren der zweiten Hälfte der Außenoberfläche 74 des Steuerkörpers 73 der Dosenhalter 40 aufgrund des formschlüssigen Eingriffs der Steuerzapfen 79, 80 in die jeweiligen Steuernuten 75, 76 eine Abfolge einer linearen Relativbewegung längs der Führungsstangen 47, 48 in einer ersten Bewegungsrichtung und anschließend in einer entgegengesetzten zweiten Bewegungsrichtung aus.

Um eine Funktion der Fördertrommel 10 als einstellbare Weiche zwischen den unterschiedlichen Fördermitteln, exemplarisch den Förderketten 2, 3, 4 und den Ladetrommeln 11, 12 zu ermöglichen, ist eine nachstehend näher beschriebene rotatorische Verstellung für den Steuerkörper 73 relativ zur Trommelachse 51 vorgesehen. Hierzu erstreckt sich der Gleitring 69 in axialer Richtung über den Lagerring 68 hinaus bis zu einem von der Trägerplatte 8 abgewandten Endbereich 88. An diesem Endbereich 88 ist der Gleitring 69 mit einem stirnseitigen, umlaufenden Bund 89 versehen, der zur drehfesten Aufnahme eines aus Gründen der Übersichtlichkeit nur transparent dargestellten Schneckenrads 92 dient.

Das Schneckenrad 92 steht seinerseits in Wirkverbindung mit einer nicht dargestellten, senkrecht zur Drehachse 15 ausgerichteten Antriebsschnecke eines als Stellantrieb dienenden Getriebemotors 93, der seinerseits in nicht näher dargestellter Weise zur Drehmomentübertragung an der Trommelachse 51 abgestützt ist. Durch eine geeignete elektrische Ansteuerung des Getriebemotors 93 kann eine relative Verdrehung des Schneckenrads 92 mit dem damit gekoppelten Gleitring 69 und dem über die Tragscheibe bewegungsgekoppelten Steuerkörper 73 relativ zur Trommelachse 51 erfolgen. Hierdurch wird eine Einstellung der Phasenlage für die Linearbewegung der Dosenhalter 40 bei der Umlaufbewegung um den Steuerkörper 73 erzielt. Anstelle des Getriebemotors 93 kann auch eine manuelle Einstellung, insbesondere mittels eines Handrads oder einer Kurbel, vorgesehen sein.

Mit Hilfe des Getriebemotors 93 kann die Phasenlage der Linearbewegung der Dosenhalter 40 beispielsweise so eingestellt werden, dass die Dosenhalter 40 der Fördertrommel 10 eine Übernahme von Dosenrohlingen von der Ladetrommel 11 und eine Übergabe von Dosenrohlingen an die Ladetrommel 12 vollziehen.

Alternativ kann die Phasenlage der Linearbewegung der Dosenhalter 40 beispielsweise so eingestellt werden, dass die Dosenhalter 40 der Fördertrommel 10 die Dosenrohlinge von der Förderkette 2 abziehen und an die Ladetrommel 12 übergeben.

Alternativ kann die Phasenlage der Linearbewegung der Dosenhalter 40 beispielsweise so eingestellt werden, dass die Dosenhalter 40 der Fördertrommel 10 eine Übernahme von Dosenrohlingen von der Ladetrommel 11 vornehmen und diese auf die Förderkette 2 aufsetzen.

Alternativ kann die Phasenlage der Linearbewegung der Dosenhalter 40 beispielsweise so eingestellt werden, dass die Dosenhalter 40 der Fördertrommel 10 die Dosenrohlinge von der Förderkette 2 abziehen und wieder auf die Förderkette 2 aufsetzen.

Nach Erreichen einer gewünschten rotatorischen Positionierung des Steuerkörpers 73 gegenüber der Trommelachse 51 kann mittels einer Bremseinrichtung 94, die einen Bremsring 95, eine Bremsplatte 96 sowie einen Gewinnspannhebel 97 umfasst, eine Arretierung der eingestellten Schwenkposition des Steuerkörpers 73 gegenüber dem Maschinengestell 6 erreicht werden. Hierzu wird eine während des Verstellvorgangs zwischen Steuerkörper 73 und Trommelachse 51 lose Verbindung gegenüber der Trommelachse 51 festgelegt. Hierbei findet eine Einleitung einer Axialkraft statt, die durch eine Drehbewegung des Gewindespannhebel 97 aufgebracht wird und die über die Bremsplatte 96 und den Bremsring 95 auf den Gleitring 69 übertragen wird.

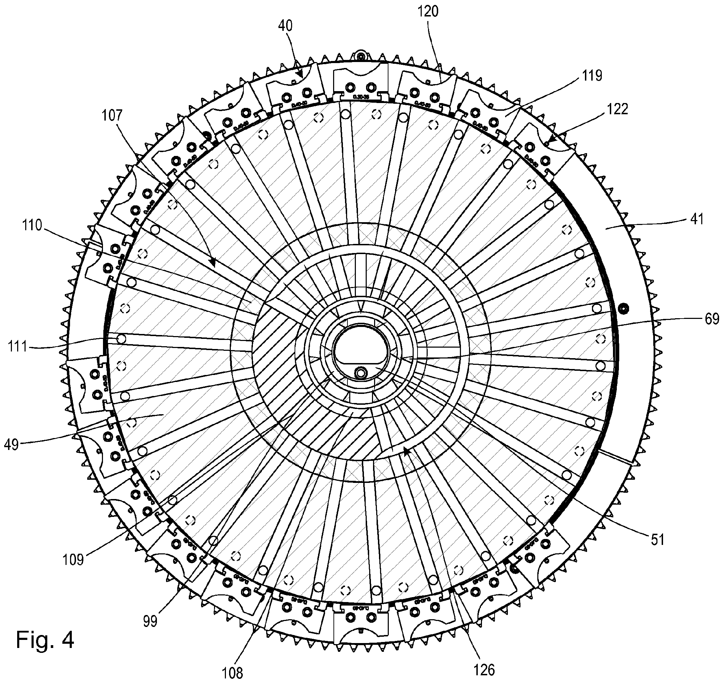

Wie ferner aus den Schnittdarstellungen der Figuren 3 und 4 entnommen werden kann, ist die Trommelachse 51 an einem von der Trägerplatte 8 abgewandten Endbereich 98 mit mehreren, jeweils in radialer Richtung ausgerichteten Bohrungen 99 versehen, die jeweils in eine Längsbohrung 100 in der Trommelachse 51 einmünden. Die Längsbohrung 100 ist am Endbereich 98 mit einem Abschlussstück 101 verschlossen, das in axialer Richtung von der Trommelachse 51 abragt und das mit einer Gewindebohrung 104 versehen ist, in die ein Gewindestift 105 des Gewindespannhebels 97 eingreift. Ferner erstreckt sich die Längsborhung 100 in Richtung der Trägerplatte 8 bis zum Kupplungsteil 52 der Trommelachse 51 und mündet dort in eine rechtwinklig abgewinkelte Anschlussbohrung 106. Dort kann rein exemplarisch in nicht dargestellter Weise eine Absaugeinrichtung für eine Bereitstellung eines Unterdrucks in die Längsbohrung 100 angeschlossen werden.

Ausgehend von den Bohrungen 99 erstrecken sich sternförmig angeordnete, als Versorgungskanäle diende Radialkanäle 107 durch den Gleitring 69, durch einen den Gleitring 69 an einer Außenumfangsfläche umgebenden Lagerring 108, durch einen den Lagerring 108 umgebenden Tragring 109, durch einen Dichtungsring 110 bis in die Lagerscheibe 50. In der Lagerscheibe 50 münden die Radialkanäle 107 in Axialkanäle 111 ein, die in fluidisch kommunizierender Verbindung mit einer als Fluidkanal dienenden Längsbohrung 112 der Führungsstangen 47 stehen.

Wie aus der Schnittdarstellung der Figur 4 entnommen werden kann, ist der Tragring 109 nur teilweise von den Radialkanälen 107 durchsetzt. Die im Tragring 109 ausgebildeten Radialkanäle 107 münden in eine teilkreisförmig am Außenumfang des Tragrings 109 ausgebildete Steuernut 126 aus, die auch als Versorgungskammer bezeichnet werden kann, von wo aus eine kommunizierende Verbindung zu denjenigen Radialkanälen 107 im Dichtungsring 110 besteht, die mit ihren nicht bezeichneten Mündungsöffnungen an die Steuernut 126 angrenzen. Dementsprechend beeinflusst die Ausdehnung und relative Stellung der Steuernut 126 die Fluidversorgung für die Radialkanäle 107 in dem Dichtungsring 110, in der Lagerscheibe 50 und damit in den Längsbohrungen 112 der Führungsstangen 47. Da der Tragring 109 in nicht näher dargestellter Weise schwenkbeweglich relativ zur Trommelachse 51 verstellt und arretiert werden kann, ist somit eine Einflussnahme auf eine Phasenlage der Fluidversorgung für die Führungsstangen 47 gewährleistet. In gleicher oder ähnlicher Weise kann eine Fluidversorgung für die als Fluidkanäle dienenden Längsbohrungen 113 der Führungsstangen 48 verwirklicht werden. Somit kann vorzugsweise sowohl eine Phasenlage für die Fluidversorgung der Führungsstangen 47 als auch eine Phasenlage für die Fluidversorgung der Führungsstangen 48 zumindest innerhalb eines vorgebbaren Phasenlagenbereichs eingestellt werden.

Im Zuge einer Rotationsbewegung der Lagerscheiben 49, 50 mit den daran angeordneten Führungsstangen 47, 48 stehen somit in einer gegebenen Rotationsstellung der Fördertrommel 10 beispielhaft nur eine gewisse Gruppe von Führungsstangen 47 in einer fluidische Kommunikation mit der Längsbohrung 100, sodass auch eine Unterdruckbeaufschlagung der jeweiligen Dosenhalter 40, die an diesen Führungsstangen 47 geführt sind, lediglich in vorgebbaren Umfangsbereichen bei der Rotation um den Steuerkörper 73 vorliegt.

Rein exemplarisch ist vorgesehen, dass die Führungsstangen 47 ausschließlich mit einem Unterdruck beaufschlagt werden können, während die Führungsstangen 48 ausschließlich mit einem Überdruck beaufschlagt werden können. Hierdurch kann bei geeigneter Gestaltung des Dosenhalters 40 in Abhängigkeit von der rotatorischen Stellung gegenüber dem Steuerkörper 73 wahlweise eine Bereitstellung von Unterdruck an den Dosenhalter oder von Überdruck an den Dosenhalter gewährleistet werden.

Zu diesem Zweck weisen die Führungsstangen 47, 48 gemäß der Darstellung der Figur 2 jeweils eine Radialbohrung 114, 115 auf, durch die eine fluidisch kommunizierende Verbindung mit der jeweiligen Längsbohrung 112, 113 geschaffen wird. Ferner umfasst der Dosenhalter 40 einen gleitbeweglich und fluidisch abdichtend auf den Führungsstangen 47, 48 aufgenommenen Schlitten 116, an dessen dem Steuerkörper 73 zugewandter Innenoberfläche 117 die Steuerzapfen 79, 80 angebracht sind und der an einer dem Steuerkörper 73 abgewandten Außenoberfläche 118 mit einer Tragschale 119 versehen ist. Die Tragschale 119 weist eine kreiszylinderabschnittsförmige, konkave Ausnehmung 120 auf, in die ein nicht näher dargestellter Dosenrohling eingelegt werden kann. Aufgrund der Profilierung der Tragschale 119 ist eine bereichsweise flächige Anlage des Dosenrohlings an der Tragschale 119 gewährleistet. In der Tragschale 119 sind rein exemplarisch in axialer Richtung mehrere als Fluidbohrungen dienende Saugbohrungen 121 eingebracht, die in fluidisch kommunizierender Verbindung mit der Längsbohrung 112 in der Führungsstange 47 stehen und die in Abhängigkeit von der Winkelstellung des jeweiligen Dosenhalters 40 gegenüber dem Steuerkörper 73 in Verbindung mit dem Radialkanal 107 und der Längsbohrung 100 stehen und dadurch eine phasenweise Beaufschlagung der Saugbohrungen 121 mit Unterdruck gewährleisten.

Ferner umfasst die Tragschale 119 einen fluidisch betätigbaren Aktor 122, der für eine radiale Linearbewegung mit kurzem Hub ausgebildet ist und diese Linearbewegung gemäß dem Bewegungspfeil 123 bereitstellen kann, sobald eine fluidisch kommunizierende Verbindung zwischen einer unterhalb eines Aktorglieds 125 ausgebildeten, als Druckkammer 124 ausgebildete Fluidbohrung mit der Radialbohrung 115 in der Führungsstange 48 vorliegt. Dabei ist die Längsbohrung 113 in der Führungsstange 48 in nicht näher dargestellter Weise mit einer Druckluftversorgung fluidisch gekoppelt, sodass der Aktor 122 eine Auswurfbewegung für den in der Tragschale 119 aufgenommenen, nicht dargestellten Dosenrohlingen vollziehen kann. Exemplarisch ist vorgesehen, dass das Aktorglied 125 durch nicht näher dargestellte Federmittel in einer zurückgezogenen Ruhestellung gehalten wird und lediglich bei Druckbeaufschlagung die Linearbewegung in radialer Richtung nach außen vollzieht, um den Ablösevorgang für den Dosenrohling zu erzielen.

In den Figuren 6 und 7 sind unterschiedliche Einstellungen für die Phasenlage einer Saugphase 127, 129 und einer Abblasphase 128, 130, die zur Betätigung des Aktors 122 dient, dargestellt, die mit Hilfe der jeweiligen, auch als Versorgungskammer bezeichneten Steuernut 126 eingestellt werden können.

Bei der Darstellung der Figur 6 ist die Saugphase 127 derart eingerichtet, dass von der Ladetrommel 11 gemäß der Figur 1 zugeführte Dosenrohlinge an den Dosenhaltern 40 der Fördertrommel 10 angesaugt werden und dass die Dosenrohlinge am Ende der Saugphase 127 mittels der Abblasphase 128, bei der der Aktor 122 betätigt wird, an die Ladetrommel 12 abgegeben werden können.

Bei der Darstellung der Figur 7 ist die Saugphase 129 derart eingerichtet, dass von der Ladetrommel 11 gemäß der Figur 1 zugeführte Dosenrohlinge an den Dosenhaltern 40 der Fördertrommel 10 angesaugt werden und dass die Dosenrohlinge am Ende der Saugphase 129 mittels der Abblasphase 130, bei der der Aktor 122 betätigt wird, auf die Förderkette 2 abgesetzt werden können.

Mit einer Einstellung der Saugphasen 127, 129 und der Abblasphasen 128, 130 geht jeweils eine Einstellung der rotatorischen Positionierung des Steuerkörpers 73 zur Einstellung der Phasenlage der Linearbewegung für die Dosenhalter 40 einher.

## Patentansprüche

1. Fördereinrichtung für Dosenrohlinge, mit einem Maschinengestell (6), an dem wenigstens eine Fördertrommel (10) drehbeweglich um eine Drehachse (15) gelagert ist, wobei die Fördertrommel (10) an einer Außenumfangsfläche mit mehreren, jeweils parallel zur Drehachse (15) linearbeweglich gelagerten Dosenhalter (40) versehen ist, sowie mit wenigstens einer der Fördertrommel (10) zugeordneten Stellanordnung (73), die zur Einleitung einer Linearbewegung auf wenigstens einen Dosenhalter (40) ausgebildet ist, wobei die wenigstens eine Stellanordnung (73) für eine Bereitstellung der Linearbewegung des wenigstens einen Dosenhalters (40) in einer vorgebbaren Abhängigkeit von einer Drehstellung der Fördertrommel (10) gegenüber dem Maschinengestell (6) ausgebildet ist, und wobei am Maschinengestell (6) eine endlos umlaufende Förderkette (2) mit mehreren Umlenkrollen (9) gelagert ist,
**dadurch gekennzeichnet, dass** zwischen der Fördertrommel (10) und dem Maschinengestell (6) ein koaxial zur Fördertrommel (10) angeordnetes und frei drehbeweglich gelagertes Kettenrad (41) für eine Förderkette (2) angeordnet ist, wobei benachbart zum Kettenrad (41) zwei Umlenkrollen (42, 43) angeordnet sind, die jeweils für eine Umlenkung der Förderkette (2) in eine Tangentenrichtung an das Kettenrad (41) ausgebildet sind und von denen wenigstens eine Umlenkrolle (42, 43) linearbeweglich verstellbar am Maschinengestell (6) aufgenommen ist.

2. Fördereinrichtung nach Anspruch 1, **dadurch gekennzeichnet, dass** die Stellanordnung (73) für die, insbesondere zyklisch, wiederkehrende Bereitstellung von Linearbewegungen auf mehrere, insbesondere auf alle, an der Fördertrommel (10) aufgenommenen Dosenhalter (40) ausgebildet ist.

3. Fördereinrichtung nach Anspruch 1 oder 2, **dadurch gekennzeichnet, dass** die Stellanordnung (73) an einer Umfangsfläche (74) oder an einer Stirnfläche wenigstens eine Bewegungsbahn (75, 76) aufweist, die für eine Anlage oder einen Eingriff eines dem jeweiligen Dosenhalter (40) zugeordneten Führungsmittels (79, 80) ausgebildet ist.

4. Fördereinrichtung nach Anspruch 3, **dadurch gekennzeichnet, dass** die Bewegungsbahn (75, 76) entlang eines ersten Bahnabschnitts (81), insbesondere über einen Umfangsbereich von 180 Grad, geradlinig verläuft und entlang eines zweiten Bahnabschnitts (82), insbesondere über einen Umfangsbereich von 180 Grad, als Abfolge von drei Kurvenabschnitten (83, 84, 85) mit zwei Wendepunkten (86, 87) ausgebildet ist.

5. Fördereinrichtung nach einem der vorhergehenden Ansprüche, **dadurch gekennzeichnet, dass** die Stellanordnung (73) drehbeweglich am Maschinengestell (6) aufgenommen ist und dass der Stellanordnung (73) eine Arretiereinrichtung (94) für eine Arretierung der Stellanordnung (73) am Maschinengestell (6) und/oder ein Stellantrieb (93) für eine Verstellung der Stellanordnung (73) gegenüber dem Maschinengestell (6) zugeordnet ist.

6. Fördereinrichtung einem der vorhergehenden Ansprüche, **dadurch gekennzeichnet, dass** die Fördertrommel (10) mehrere, jeweils parallel zur Drehachse (15) ausgerichtete Führungsstangen (47, 48) umfasst, an denen die Dosenhalter (40) linearbeweglich aufgenommen sind und die zusammen mit einer Trommelachse (51) ein kreisringförmiges Innenvolumen bestimmen, wobei das wenigstens eine Stellmittel (73) in dem Innenvolumen angeordnet ist.

7. Fördereinrichtung nach Anspruch 6, **dadurch gekennzeichnet, dass** jedem der Dosenhalter (40) wenigstens eine Führungsstange (47, 48) zugeordnet ist, die mit einem Fluidkanal (112, 113), versehen ist, der für eine fluidisch kommunizierende Kopplung wenigstens einer am Dosenhalter (40) ausgebildeten Fluidbohrung (121, 124) mit einem der Führungsstange (47, 48) endseitig zugeordneten Versorgungskanal (107) ausgebildet ist.

8. Fördereinrichtung nach Anspruch 7, **dadurch gekennzeichnet, dass** der Dosenhalter(40) einen fluidisch ansteuerbaren Aktor (122) mit einem beweglich am Dosenhalter (40) aufgenommenen Aktorglied umfasst, der für eine Bereitstellung einer Dosenabstoßbewegung ausgebildet ist.

9. Fördereinrichtung nach Anspruch 7 oder 8, **dadurch gekennzeichnet, dass** die Führungsstangen (47, 48) jeweils endseitig in Lagerscheiben (49, 50) aufgenommen sind, die drehbeweglich an einer ortsfest am Maschinengestell (6) angebrachten Trommelachse (51) gelagert sind und dass wenigstens eine Lagerscheibe (49, 50) von radial ausgerichteten Versorgungskanälen (107) durchsetzt ist, die an einem radial innenliegenden Endbereich in wenigstens eine Versorgungskammer (126) ausmünden.

10. Fördereinrichtung nach Anspruch 9, **dadurch gekennzeichnet, dass** die wenigstens eine Versorgungskammer (126) längs eines Umfangsabschnitts der Drehachse (15) erstreckt ist und schwenkbeweglich verstellbar an der Trommelachse (51) angebracht ist.

11. Fördereinrichtung nach Anspruch 10, **dadurch gekennzeichnet, dass** mehrere, insbesondere schwenkbeweglich verstellbare Versorgungskammern (126) an der Trommelachse (51) angebracht sind, die für eine Beaufschlagung unterschiedlicher Gruppen von Versorgungskanälen (107) mit unterschiedlichen Druckniveaus ausgebildet sind.

12. Fördereinrichtung nach einem der vorhergehenden Ansprüche, **dadurch gekennzeichnet, dass** der Fördertrommel (10) wenigstens zwei Fördermittel aus der Gruppe: Förderband mit Lademulden, Förderkette (2, 3, 4) mit Ladedornen (5), Ladestern mit festen Ladeschalen, Ladetrommel (11, 12) mit linearbeweglichen Ladeschalen (28, 29), Manipulator mit Dosengreifer, zugeordnet ist.

13. Fördereinrichtung nach Anspruch 12, **dadurch gekennzeichnet, dass** der Fördertrommel wenigstens zwei Ladetrommeln zugeordnet sind, deren Drehachsen (16, 17) parallel zur Drehachse (15) der Fördertrommel (10) ausgerichtet ist, wobei wenigstens einer der Ladetrommeln (11, 12) eine Einstelleinrichtung zur Einstellung eines Abstands gegenüber der Fördertrommel (10) zugeordnet ist.

14. Fördereinrichtung nach Anspruch 13, **dadurch gekennzeichnet, dass** die Dosenhalter (28, 29, 40) an der Fördertrommel (10) und an der Ladetrommel (11, 12) jeweils in gleicher Teilung angeordnet sind und dass eine Anzahl von Dosenhaltern (40) der Fördertrommel (10) größer als eine Anzahl von Dosenhaltern (28, 29) an der Ladetrommel (11, 12) ist..

## Claims

1. A conveyor for can blanks, having a machine frame (6), on which at least one conveyor drum (10) is supported so that it can rotate about an axis of rotation (15), wherein the conveyor drum (10) is provided with a plurality of can holders which are supported on an external circumferential surface of the conveyor drum (10), wherein each can holder is linearly moveable parallel to the axis of rotation (15) and the conveyor drum comprises at least one actuator system (73) which is configured to impart a linear movement to at least one can holder(40), wherein the at least one actuator system (73) is configured to provide the linear movement of the at least one can holder (40) as a predefinable function of a rotational position of the conveyor drum (10) in relation to the machine frame (6) and wherein a continuously rotating conveyor chain (2) with a plurality of deflection rollers (9) is supported on the machine frame (6), **characterised in that** between the conveyor drum (10) and the machine frame (6) a sprocket (41) for the conveyor chain (2) is arranged coaxially to the conveyor drum (10) which sprocket (41) is able to rotate freely, wherein adjacent to the sprocket (41) two deflection rollers (42, 43) are arranged, both of them are configured to deflect the conveyor chain (2) in a tangential direction to the sprocket (41) and wherein at least one of these deflection rollers (42, 43) is linearly moveable attached on the machine frame (6).

2. The conveyor according to claim 1, **characterised in that** the actuator system (73) is configured for the, in particular cyclically, recurring provision of linear movements for a plurality of, in particular all, can holders (40) accommodated by the conveyor drum (10).

3. The conveyor according to claim 1 or 2, **characterised in that** the actuator system (73) comprises at least one trajectory (75, 76) on a circumferential surface or on a front face, which is configured for an attachment or an engagement of a guidance means (79, 80) associated with the respective can holder (40).

4. The conveyor according to claim 3, **characterised in that** the trajectory (75, 76) extends along a first path section (81), in particular over a circumference range of 180 degrees, in a straight line and a second path section (82), in particular over a circumference range of 180 degrees, is configured as a succession of three curve sections (83, 84, 85) with two inflection points (86, 87).

5. The conveyor according to any of the preceding claims, **characterised in that** the actuator system (73) is rotatably accommodated on the machine frame (6) and **in that** the actuator system (73) is associated with a locking device (94) for locking the actuator system (73) to the machine frame (6) and/or an actuating drive (93) for adjusting the actuator system (73) in relation to the machine frame (6).

6. The conveyor according to any of the preceding claims, **characterised in that** the conveyor drum (10) comprises a plurality of guide rods (47, 48) in each case aligned parallel to the axis of rotation (15), on which the can holders (40) are accommodated so that they can move linearly and which together with a drum axis (51) determine an annular interior volume, wherein the at least one actuating means (73) is arranged in the interior volume.

7. The conveyor according to claim 6, **characterised in that** each can holder (40) is associated with at least one guide rod (47, 48), provided with a fluid channel (112, 113), configured for a fluidically communicating coupling of at least one fluid hole (121, 124) configured on the can holder (40) with a supply channel (107) arranged at the end of the guide rod (47, 48).

8. The conveyor according to claim 7, **characterised in that** the can holder (40) comprises a fluidically-controllable actuator (122) with an actuator element movably accommodated on the can holder (40), configured to provide a can pushing-off movement.

9. The conveyor according to claim 7 or 8, **characterised in that** the guide rods (47, 48) are in each case accommodated at the end in bearing discs (49, 50), rotatably supported on a drum axis (51) immovably arranged on the machine frame (6) and that at least one bearing disc (49, 50) comprises radially aligned supply channels (107), opening at a radial internal end area into at least one supply chamber (126).

10. The conveyor according to claim 9, **characterised in that** the at least one supply chamber (126) extends along a circumferential section of the axis of rotation (15) and is attached on the drum axis (51) so that it is adjustable by a swivel motion.

11. The conveyor according to claim 10, **characterised in that** a plurality of adjustable supply chambers (126), in particular adjustable by a swivel motion, are attached to the drum axis (51), which are configured for impinging different groups of supply channels (107) with different pressure levels.

12. The conveyor according to any of the preceding claims, **characterised in that** the conveyor drum (10) is associated with at least two means of conveyance from the group: conveyor belt with hoppers, conveyor chain (2, 3, 4) with loading mandrels (5), loading star with fixed loading shells, loading drum (11, 12) with linearly-moving loading shells (28, 29), manipulator with can gripper.

13. The conveyor according to claim 12, **characterised in that** the conveyor drum is associated with at least two loading drums the axes of rotation (16, 17) of which are aligned parallel to the axis of rotation (15) of the conveyor drum (10), wherein at least one of the loading drums (11, 12) is associated with an adjusting device for setting a distance in relation to the conveyor drum (10).

14. The conveyor according to claim 13, **characterised in that** the can holders (28, 29, 40) are arranged on the conveyor drum (10) and on the loading drum (11, 12) with the same spacing and that a number of can holders (40) of the conveyor drum (10) is greater than a number of can holders (28, 29) on the loading drum (11, 12).

## Revendications

1. Dispositif de transport pour ébauches de boîte, avec un bâti de machine (6), sur lequel est monté au moins un tambour de transport (10) de manière mobile en rotation autour d'un axe de rotation (15), dans lequel le tambour de transport (10) est pourvu sur une surface périphérique extérieure de plusieurs porte-boîtes (40) montés de manière mobile linéairement respectivement parallèlement à l'axe de rotation (15), ainsi qu'avec au moins un ensemble de réglage (73) associé au tambour de transport (10), qui est réalisé pour imprimer un mouvement linéaire sur au moins un porte-boîte (40), dans lequel l'au moins un ensemble de réglage (73) est réalisé pour fournir le mouvement linéaire de l'au moins un porte-boîte (40) dans une dépendance spécifiable d'une position de rotation du tambour de transport (10) par rapport au bâti de machine (6), et dans lequel une chaîne de transport (2) circulant sans fin est montée avec plusieurs poulies de renvoi (9) sur le bâti de machine (6),
**caractérisé en ce qu'**est disposé entre le tambour de transport (10) et le bâti de machine (6) un pignon (41) disposé de manière coaxiale au tambour de transport (10) et montré de manière librement mobile en rotation, pour une chaîne de transport (2), dans lequel sont disposées de manière adjacente au pignon (41) deux poulies de renvoi (42, 43), qui sont réalisées respectivement pour un renvoi de la chaîne de transport (2) dans une direction tangentielle sur le pignon (41) et dont au moins une poulie de renvoi (42, 43) est logée de manière mobile linéairement de manière ajustable sur le bâti de machine (6).

2. Dispositif de transport selon la revendication 1, **caractérisé en ce que** l'ensemble de réglage (73) est réalisé pour fournir de manière récurrente, en particulier de manière cyclique, des mouvements linéaires sur plusieurs, en particulier tous les, porte-boîtes (40) logés sur le tambour de transport (10).

3. Dispositif de transport selon la revendication 1 ou 2, **caractérisé en ce que** l'ensemble de réglage (73) présente sur une surface périphérique (74) ou sur une surface frontale au moins une trajectoire de déplacement (75, 76), qui est réalisée pour un appui ou une prise d'un moyen de guidage (79, 80) associé au porte-boîte (40) concerné.

4. Dispositif de transport selon la revendication 3, **caractérisé en ce que** la trajectoire de déplacement (75, 76) s'étend de manière rectiligne le long d'un premier tronçon de trajectoire (81), en particulier sur une zone périphérique de 180 degrés et est réalisée le long d'un deuxième tronçon de trajectoire (82), en particulier sur une zone périphérique de 180 degrés, en tant que succession de trois tronçons de courbe (83, 84, 85) avec deux points de retournement (86, 87).

5. Dispositif de transport selon l'une quelconque des revendications précédentes, **caractérisé en ce que** l'ensemble de réglage (73) est logé de manière mobile en rotation sur le bâti de machine (6) et qu'un dispositif d'arrêt (84) pour un arrêt de l'ensemble de réglage (73) sur le bâti de machine (6) et/ou un entraînement de réglage (93) pour un ajustement de l'ensemble de réglage (73) par rapport au bâti de machine (6) sont associés à l'ensemble de réglage (73).

6. Dispositif de transport selon l'une quelconque des revendications précédentes, **caractérisé en ce que** le tambour de transport (10) comprend plusieurs tiges de guidage (47, 48) orientées respectivement parallèlement à l'axe de rotation (15), sur lesquelles les porte-boîtes (40) sont logés de manière mobile linéairement et qui définissent conjointement avec un axe de tambour (51) un volume intérieur en forme d'anneau circulaire, dans lequel l'au moins un moyen de réglage (73) est disposé dans le volume intérieur.

7. Dispositif de transport selon la revendication 6, **caractérisé en ce qu'**est associée à chacun des porte-boîtes (40) au moins une tige de guidage (47, 48), qui est pourvue d'un canal de fluide (112, 113), qui est réalisé pour un couplage de communication fluidique d'au moins un alésage pour fluide (121, 124) réalisé sur le porte-boîte (40) à un canal d'alimentation (107) associé côté extrémité à la tige de guidage (47, 48).

8. Dispositif de transport selon la revendication 7, **caractérisé en ce que** le porte-boîte (40) comprend un actionneur (122) à pilotage fluidique avec un organe d'actionneur logé de manière mobile sur le porte-boîte (40), qui est réalisé pour fournir un mouvement de rejet de boîte.

9. Dispositif de transport selon la revendication 7 ou 8, **caractérisé en ce que** les tiges de guidage (47, 48) sont logées respectivement côté extrémité dans des disques de palier (49, 50), qui sont montés de manière mobile en rotation sur un axe de tambour (51) placé de manière stationnaire sur le bâti de machine (6), et qu'au moins un disque de palier (49, 50) est traversé par des canaux d'alimentation (107) orientés de manière radiale, qui débouchent dans au moins une chambre d'alimentation (126) sur une zone d'extrémité située à l'intérieur radialement.

10. Dispositif de transport selon la revendication 9, **caractérisé en ce que** l'au moins une chambre d'alimentation (126) s'étend le long d'un tronçon périphérique de l'axe de rotation (15) et est installée de manière mobile par pivotement de manière ajustable sur l'axe de tambour (51).

11. Dispositif de transport selon la revendication 10, **caractérisé en ce que** sont placées sur l'axe de tambour (51) plusieurs chambres d'alimentation (126) ajustables en particulier de manière mobile par pivotement, qui sont réalisées pour soumettre des groupes différents de canaux d'alimentation (107) à l'action de différents niveaux de pression.

12. Dispositif de transport selon l'une quelconque des revendications précédentes, **caractérisé en ce que** sont associés au tambour de transport (10) au moins deux moyens de transport issus du groupe : bande transporteuse avec cavités de chargement, chaîne de transport (2, 3, 4) avec mandrins de chargement (5), étoile de chargement avec des coques de chargement fixes, tambour de chargement (11, 12) avec des coques de chargement (28, 29) mobiles linéairement, manipulateur avec grappin de boîte.

13. Dispositif de transport selon la revendication 12, **caractérisé en ce que** sont associés au tambour de transport au moins deux tambours de chargement, dont les axes de rotation (16, 17) sont orientés parallèlement à l'axe de rotation (15) du tambour de transport (10), dans lequel un dispositif de réglage pour régler un espacement par rapport au tambour de transport (10) est associé à l'au moins un des tambours de chargement (11, 12).

14. Dispositif de transport selon la revendication 13, **caractérisé en ce que** les porte-boîtes (28, 29, 40) sont disposés sur le tambour de transport (10) et sur le tambour de chargement (11, 12) respectivement de manière équidistante, et qu'un nombre de porte-boîtes (40) du tambour de transport (10) est supérieur à un nombre de porte-boîtes (28, 29) sur le tambour de chargement (11, 12).
